# EUROPÄISCHE PATENTSCHRIFT

(11) **EP 2 552 717 B1**
(45) Veröffentlichungstag und Bekanntmachung des Hinweises auf die Patenterteilung: **02.01.2019**
(21) Anmeldenummer: 11711454.6
(22) Anmeldetag: 22.03.2011
(51) Int. Cl.: B60G 7/00, F16C 7/00, F16C 11/04, F16C 27/06, F16C 7/02

(54) **VERBINDUNGSSTREBE**
CONNECTING ROD
BIELLE DE LIAISON

(30) Priorität: 31.03.2010 DE 102010013518
(43) Veröffentlichungstag der Anmeldung: 06.02.2013
(73) Patentinhaber: THK Rhythm Automotive GmbH, 40233 Düsseldorf (DE)
(72) Erfinder: ERDOGAN, Cengiz, 47608 Geldern (DE)
(74) Vertreter: Prinz & Partner mbB
(86) Internationale Anmeldenummer: PCT/EP2011/001421
(87) Internationale Veröffentlichungsnummer: WO 2011/120648

(56) Entgegenhaltungen:
- WO-A1-02/42660
- DE-A1- 2 058 028
- DE-A1- 10 153 799
- DE-A1-102010 036 641
- DE-C1- 3 921 468
- US-B1- 6 241 267

## Beschreibung

Die Erfindung betrifft eine Verbindungsstrebe insbesondere für ein Fahrwerk eines Fahrzeugs, nach dem Oberbegriff von Anspruch 1.

Um eine Achse oder Radaufhängung eines Fahrzeugs mit dem Fahrzeugaufbau zu verbinden, werden häufig Verbindungsstreben, sogenannte Lenker, verwendet. Die Lenker sind verschwenkbar mit jeweils einem Lager zum einen am Fahrzeugaufbau und zum anderen an der Achse oder der Radaufhängung befestigt, so dass eine Bewegung der Radaufhängung in vertikaler Richtung (Ein- und Ausfedern) möglich ist. Beim Einfedern wird aber unter Umständen neben der vertikalen Position der Radaufhängung auch die Radausrichtung, der sogenannte Sturz der Radaufhängung, verändert, beispielsweise beim einseitigen Einfedern eines Rades. Die Radaufhängung wird dabei um eine längs der Fahrzeuglängsachse verlaufende Achse verschwenkt. Die dabei auftretende Verdrehung muss von den Lagern kompensiert werden, mit denen die Verbindungsstrebe mit dem Fahrzeugaufbau bzw. der Radaufhängung verbunden ist. Konstruktion und Herstellung solcher Lager, die diese Relativdrehung ermöglichen, sind allerdings aufwändig und kostenintensiv.

DE 101 53 799 A1 zeigt eine Verbindungsstrebe, die aus einem länglichen Grundkörper und zwei endständigen Lageraufnahmen zur Ein- und Ausleitung von Kräften besteht. Der Grundkörper besteht aus einem Verbund mindestens einer flachen Metalleinlage und einer die Restkontur bildenden Kunststoffstruktur, welche durch Umspritzen der Metalleinlage gebildet wird. Die Metalleinlage ist massiv ausgeführt, was zu einer vergleichsweisen hohen Torsionssteifigkeit führt. Des Weiteren kann die Verbindungsstrebe eine Krümmung in der Ebene der zentralen Metalleinlage aufweisen, wodurch die Torsionssteifigkeit ebenfalls vergleichsweise groß ist.

DE 39 21 468 C1 zeigt eine Verbindungsstrebe, in Form eines Lenkers für Radaufhängungen von Kraftfahrzeugen. Ein solcher Lenker wird aus zwei identischen Pressformteilen gebildet, die an einem Ende und aufeinander zu gerichtet jeweils einen Ringkragen aufweisen. Die Pressformteile verlaufen zueinander parallel und haben über den größten Teil ihrer Längserstreckung einen flachen U-förmigen Querschnitt, wobei die von einem Steg dieses Querschnitts abgewinkelten U-Schenken aufeinander zu gerichtet sind. Diese Ausgestaltung der Pressformteile verleiht der Verbindungsstrebe eine vergleichsweise große Torsionssteifigkeit.

Eine Verbindungsstrebe nach dem Oberbegriff von Anspruch 1 ist in der US 6,241,267 B1 gezeigt, wobei die Trägerelemente bei dieser Verbindungsstrebe einen W-förmigen Querschnitt mit aufeinander zu gerichteten Schenkeln aufweist.

Aufgabe der Erfindung ist es, eine Verbindungsstrebe für ein Fahrwerk eines Fahrzeugs bereitzustellen, die insgesamt eine kostengünstigere Konstruktion ermöglicht.

Diese Aufgabe wird durch eine Verbindungsstrebe mit den Merkmalen von Anspruch 1 gelöst. Vorteilhafte Weiterbildungen der Erfindung sind in den abhängigen Ansprüchen definiert.

Eine erfindungsgemäße Verbindungsstrebe dient insbesondere zum Einsatz für ein Fahrwerk eines Fahrzeugs. Die Verbindungsstrebe umfasst einen länglichen Träger, der zumindest zwei zueinander beabstandete Trägerelemente aufweist. Die Trägerelemente sind an ihren Enden jeweils durch ein Verbindungselement miteinander verbunden. Der Träger weist bezüglich der Längsachse der Verbindungsstrebe eine hohe Biegesteifigkeit sowie Druckfestigkeit , jedoch eine geringe Torsionssteifigkeit auf. Die Erfindung beruht auf dem Grundgedanken, die unvermeidbare Verdrehung zwischen den beiden Enden der Trägerelemente, z.B. an Lagerpunkten am Fahrzeugaufbau und an der Radachse bzw. am Radträger, nicht durch die üblicherweise verwendeten Gummilager aufzunehmen, sondern (zumindest zu einem wesentlichen Teil) durch eine Verdrillung bzw. Tordierung der Verbindungsstrebe selbst. Zu diesem Zweck ist die Verbindungsstrebe mit einer vergleichsweise geringen Torsionssteifigkeit ausgeführt, mit gleichzeitig hoher Biegesteifigkeit. Dadurch ergibt sich, dass die Relativdrehung, die von den Lagerungen der Verbindungsstrebe, welche an den Enden der Trägerelemente vorgesehen sein können, aufgenommen werden müssen, reduziert ist, so dass die Lagerungen einfacher und leichter konstruiert werden können. Die Gesamtfertigungskosten für die Verbindungsstrebe können dadurch deutlich reduziert werden. Zudem kann die Verbindungsstrebe insgesamt leichter konstruiert werden, da keine hohen Torsionskräfte übertragen werden müssen.

Im Sinne der Erfindung ist der Widerstand des Trägers gegen eine Verbiegung quer zu seiner Längsachse, d.h. seine "Biegesteifigkeit" gleichbedeutend mit der Eigenschaft "Knicksteifigkeit" zu verstehen. Dies bedeutet, dass die Verbindungsstrebe bei einer äußeren Lasteinwirkung auf zumindest eines ihrer Enden und in Richtung ihrer Längsachse nicht ohne weiteres wegknickt.

In vorteilhafter Weiterbildung der Erfindung kann zumindest ein Trägerelement einen rechteckförmigen Querschnitt mit im Wesentlichen geraden Seitenseiten aufweisen. Ein solches Trägerelement ist in Form einer Platte ausgebildet, so dass das Trägerelement dadurch eine geringe Torsionssteifigkeit aufweist. Eine gleichzeitig hohe Biegesteifigkeit kann dadurch erzielt werden, dass die beiden Trägerelemente entlang der Längsachse der Verbindungsstrebe an zumindest einem Punkt miteinander verbunden sind.

In vorteilhafter Weiterbildung der Erfindung kann zumindest ein Trägerelement einen offenen Profilquerschnitt aufweisen, wobei der offene Bereich dieses Profilquerschnitts von dem jeweils anderen Trägerelement weg nach außen gerichtet ist. Im Allgemeinen führt ein offener Profilquerschnitt zu einer geringen Torsionssteifigkeit. Die Verwendung von Trägerelementen mit einem solch offenen Profilquerschnitt verleiht dadurch der erfindungsgemäßen Verbindungsstrebe die gewünschte geringe Torsionssteifigkeit. Des Weiteren ist ein Trägerelement mit einem solch offenen Profilquerschnitt zumindest im Bereich seiner neutralen Phase in Richtung des jeweils anderen Trägerelements gewölbt ausgebildet. Somit ist dieses Trägerelement im Bereich seiner neutralen Phase relativ zu dem anderen Trägerelement geringer beabstandet als sein äußerer Randbereich. Zweckmäßigerweise weist keines der Trägerelemente der Verbindungsstrebe in seinem Querschnitt einen abgewinkelten Bereich auf, so dass dadurch eine geringe Torsionssteifigkeit gewährleistet ist.

Der Träger der Verbindungsstrebe kann beispielsweise zumindest zwei parallele Trägerelemente aufweisen. Bei gleichem Gewicht kann so eine hohe Biege- und Drucksteifigkeit erzielt werden, ohne dass sich eine hohe Torsionssteifigkeit einstellt. Die Trägerelemente können im Querschnitt betrachtet symmetrisch zur Trägerlängsachse angeordnet sein.

Die parallelen Trägerelemente sind vorzugsweise ausschließlich an ihren Enden miteinander verbunden und ansonsten voneinander entkoppelt. Dadurch ist sichergestellt, dass eine ungehinderte Torsion des Trägers bzw. der Trägerelemente möglich ist. Die Verbindungsstrebe kann sich über die gesamte Länge gleichmäßig verformen, so dass die Torsionsbelastung gleichmäßig auf die gesamte Länge des Trägers verteilt werden kann.

In einer bevorzugten Ausführungsform weisen die Trägerelemente einen U-förmigen oder kreissegmentförmigen Querschnitt auf. Durch die Ausbildung eines solchen Querschnitts kann die Biegesteifigkeit und die Druckfestigkeit der Trägerelemente und somit der Verbindungsstrebe erhöht werden, sodass eine weitere Gewichtsreduktion möglich ist.

Vorzugsweise sind die Außenkanten der Trägerelemente in dieser Ausführungsform voneinander weg gerichtet.

In vorteilhafter Weiterbildung der Erfindung können die Verbindungselemente, durch die die Trägerelemente an ihren jeweiligen Enden miteinander verbunden sind, bei einer äußeren Krafteinwirkung relativ zueinander in einem Winkel von bis zu 20° tordieren. Eine solche Tordierung bzw. Torsion des Trägers erfolgt im rein elastischen Bereich. Dieser Winkel, bis zu dem die Verbindungselemente an den Enden der Trägerelemente sich relativ zueinander verdrehen können, kann vorzugsweise bis zu 10°, weiter vorzugsweise bis zu 5 %, betragen. Hierbei ist es unbeachtlich, ob eine Verdrehbewegung für nur ein Verbindungselement bzw. für beide Verbindungselemente (in entgegengesetzter Richtung) vorliegt. Einzig maßgeblich ist, dass sich die beiden Verbindungselemente an den jeweiligen Enden der Trägerelemente relativ zueinander in dem genannten Winkelbereich verdrehen können, wodurch die geringe Torsionssteifigkeit der Verbindungsstrebe zum Ausdruck kommt.

In vorteilhafter Weiterbildung der Erfindung kann zumindest ein Stützelement vorgesehen sein, das die Trägerelemente umfänglich umschließt. In einfachster Form kann ein solches Stützelement als Ring ausgebildet sein, der die Trägerelemente um ihren Umfang herum umgreift. Dieses Stützelement verbessert die Biegesteifigkeit der Verbindungsstrebe, da ein Bewegen bzw. Ausknicken der Trägerelemente im Bereich dieses Stützelements weg voneinander nach außen nicht möglich ist. Das Stützelement kann alternativ auch in Form einer Rohrhülse ausgebildet sein, die sich entlang der Längsachse des Trägers erstreckt und in gleicher Weise wie ein Ring die Trägerelemente umfänglich umschließt.

In vorteilhafter Weiterbildung der Erfindung kann zumindest ein Verbindungselement, mittels dessen die Trägerelemente an ihren Enden miteinander verbunden sind, aus einem Lager bzw. Lagerteil bestehen, vorzugsweise aus einem Gummilager. Zur Reduzierung der Fertigungskosten können die Trägerelemente mit einem solchen Lagerteil verschweißt sein. Somit ist eine getrennte Fertigung der Trägerelemente und des Lagerteils und eine einfache spätere Verbindung dieser Teile möglich.

In den Lagerteilen sind vorzugsweise Gummilager angeordnet, mit denen die Verbindungsstrebe schwenkbar am Fahrzeugaufbau und an der Radaufhängung befestigt wird. Durch die Gummilager werden Stöße gedämpft und eine notwendige Elastizität des Fahrwerks aufrechterhalten. Zudem erlauben die Gummilager eine geringe Verdrehung, so dass diese einen Teil der Verdrillung aufnehmen können.

Die Längsachsen der Lager sind vorzugsweise senkrecht zur Trägerlängsachse ausgerichtet, sodass diese quer zur Torsionsrichtung der Verbindungsstrebe verlaufen.

Die Strebe ist beispielsweise ein Längslenker, insbesondere für ein Fahrwerk eines LKW.

Weitere Vorteile und Merkmale ergeben sich aus der nachfolgenden Beschreibung in Verbindung mit den beigefügten Zeichnungen. In diesen zeigen:
- Figur 1 ein Fahrwerk eines Fahrzeugs,
- Figur 2 eine Verbindungsstrebe nach dem Stand der Technik,
- Figur 3 eine erfindungsgemäße Verbindungsstrebe,
- Figur 4 eine Schnittansicht durch die Verbindungsstrebe aus Figur 3,
- Figur 5 eine Ansicht der Verbindungsstrebe aus Figur 3 in tordiertem Zustand,
- Figur 6 die Verbindungsstrebe von Fig. 5, wobei ein Gummilager in Querschnittsansicht dargestellt ist, das an Lagerteilen der Verbindungsstrebe montiert wird,
- Figur 7 die Verbindungsstrebe in einer weiteren Ausführungsform, und
- Figur 8 die Verbindungsstrebe von Fig. 7, mit darin montierten Gummilagern.

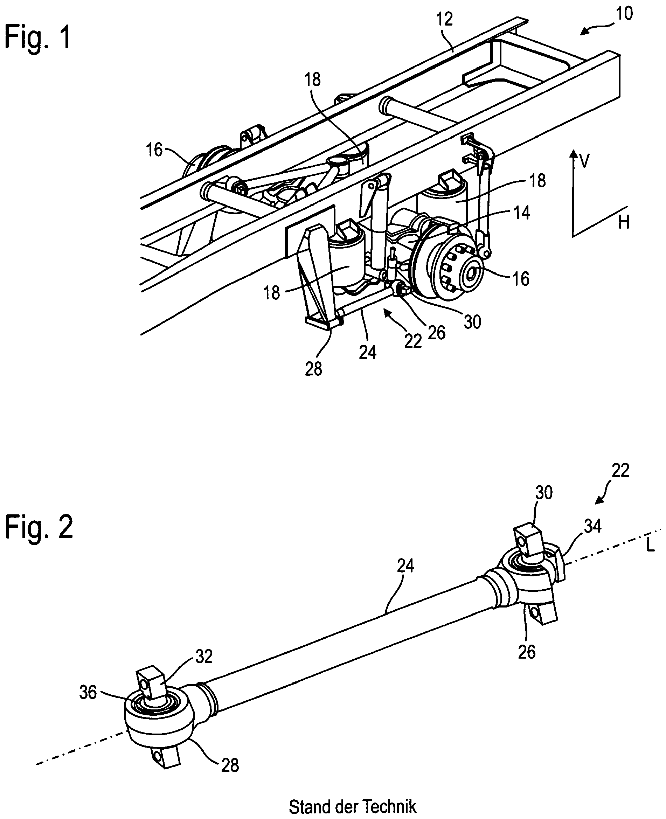

Der in Figur 1 abschnittsweise gezeigte Fahrzeugaufbau 10 eines Lkw weist einen Rahmen 12 auf, an dem eine Achse 14 gelagert ist. Die Achse 14 hat zwei Radaufnahmen 16, an denen jeweils ein Rad befestigt werden kann. Um Stöße auf die Achse 14 bzw. die Radaufhängungen 16 abzufedern, ist die Achse 14 in vertikaler Richtung V begrenzt beweglich am Rahmen 12 gelagert. An jeder Radaufhängung sind jeweils zwei Federelemente 18 vorgesehen, die zwischen Rahmen und Radaufhängung 16 bzw. Achse 14 angeordnet sind und die eine vertikale Bewegung der Achse 14 dämpfen bzw. abfedern können. Zur Stabilisierung der Achse 14 bzw. der Radaufnahme 16 in horizontaler Richtung H ist an jeder Radaufhängung 16 eine Verbindungsstrebe 22, ein sogenannter Längslenker, vorgesehen.

Die Verbindungsstrebe 22 hat einen biegesteifen und druckfesten Träger 24 sowie zwei an den Enden der Verbindungsstrebe 22 angeordnete Lagerteile 26, 28. Jedes Lagerteil dient als Gehäuse für ein Gummilager, in dem jeweils ein Gelenkzapfen 30, 32 gelagert ist (siehe Figur 2). Mit diesen Gelenkzapfen 30, 32 ist die Verbindungsstrebe 22 an der Radaufhängung 16 und am Rahmen 12 verschwenkbar gelagert.

Beim Einfedern der Achse 14 in vertikaler Richtung V wird die Verbindungsstrebe 22 um das am Rahmen 12 gelagerte Lagerteil 28 verschwenkt. Dabei führt sie die Achse 14 in horizontaler Richtung H. Wenn die Achse 14 schief zur vertikalen Richtung einfedert, wird auch die Ausrichtung der Radaufhängung 16, der sogenannte Sturz verändert. Anders ausgedrückt:, die Radaufhängung wird um eine parallel zur Fahrzeuglängsachse verlaufende Achse verschwenkt. Der an der Radaufhängung 16 befestigte Gelenkzapfen 30 wird dabei gegenüber dem am Rahmen befestigten Gelenkzapfen 32 verdreht, so dass eine Torsionsbelastung wirkt.

In Figur 2 ist eine Verbindungsstrebe nach dem Stand der Technik dargestellt. Diese weist einen rohrförmigen Träger 24 auf, der aus geometrischen Gründen (geschlossener kreisförmiger Querschnitt) sehr torsionssteif ist.

Die Gelenkzapfen 30, 32 weisen jeweils eine kugelförmige Verdickung 34, 36 auf, die in dem jeweiligen Lagerteil 26, 28 gelagert ist. Die Lagerteile 26, 28 bilden zusammen mit den Gelenkzapfen 30, 32 einen sogenannten molekularen Gelenkkörper. Ein solcher molekularer Gelenkkörper ermöglicht eine Bewegung der darin gelagerten Gelenkzapfen 30, 32 um mehrere Freiheitsgrade: Die Gelenkzapfen 30, 32 können zum einen um ihre Längsachse gedreht werden. Zum anderen können die Gelenkzapfen 30, 32 um einem definiertem Winkel um die Längsachse L der Verbindungsstrebe 22 bzw. des Trägers 24 verdreht werden, so dass eine Verdrehung der Gelenkzapfen 30, 32 gegeneinander in den Lagerteilen 26, 28 ausgeglichen werden kann. Die Herstellung sowie die Montage solcher Gelenkkörper sind allerdings sehr aufwändig und teuer.

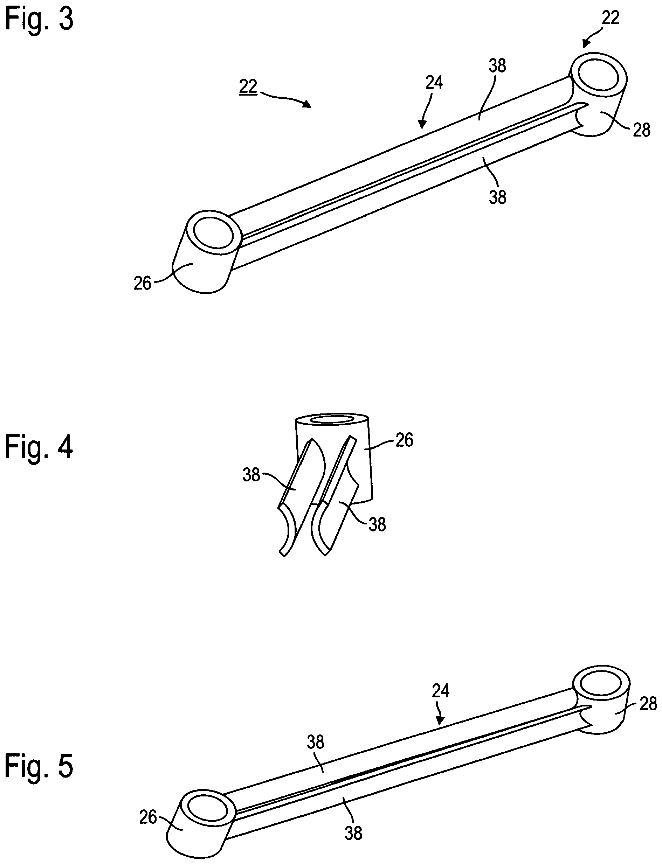

Die in Figur 3 gezeigte erfindungsgemäße Verbindungsstrebe 22 hat demgegenüber einen Träger 24 mit einer sehr viel geringeren Torsionssteifigkeit, bei gleichzeitig hoher Biegesteifigkeit bzw. Knicksteifigkeit. In der hier dargestellten Ausführungsform hat der Träger 24 zwei parallel zueinander angeordnete Trägerelemente 38, die jeweils ausschließlich an ihren jeweiligen Enden über geeignete Verbindungselemente in Form der Lagerteile 26, 28 miteinander verbunden sind. In Abwandlung von der Darstellung von Fig. 3 kann der Träger 24 auch mehr als zwei Trägerelemente 38 aufweisen..

Der Begriff "geringe Torsionssteifigkeit" bedeutet in Bezug auf die erfindungsgemäße Verbindungsstrebe 22, dass die Enden der Trägerelemente 38 relativ zueinander in einem vorbestimmten Winkel zueinander verdrehbar sind, wobei diese Verdrehung in einem rein elastischen Bereich des Trägers 24 erfolgt. Dieser Winkel kann einen Wert von 20°, vorzugsweise einen Wert von 10°, und weiter vorzugsweise einen Wert von 5° annehmen. Dies bedeutet, dass die Lagerteile 26, 28, die an den Enden der Trägerelemente 38 befestigt sind, um einen solchen Winkel relativ zueinander bezüglich der Längsachse des Trägers 24 verdreht werden können.

Beide Trägerelemente 38 verlaufen in Längsrichtung des Trägers 24 im Wesentlichen parallel und in einem geringen Abstand zueinander. Alternativ ist es auch möglich, dass die Trägerelemente 38 mit ihren jeweiligen Längsachsen einen spitzen Winkel einschließen. Beide Trägerelemente 38 sind im Wesentlichen geradlinig ausgebildet, so dass sie in Richtung ihrer Längsachse keine Krümmung aufweisen. Dies unterstützt die gewünschte geringe Torsionssteifigkeit des Trägers 24 bezüglich seiner Längsachse.

Die Trägerelemente 38 sind an die Lagerteile 26, 28 angeschweißt und ansonsten voneinander entkoppelt. Das heißt, es besteht entlang der Längsachse des Trägers 24 keine Verbindung zwischen den Trägerelementen 38, so dass sich diese unabhängig voneinander tordieren können. Die Trägerelemente 38 können aber auch zur Stabilisierung partiell miteinander verbunden sein. Die Lagerteile 26, 28 sind hier zylindrisch ausgebildet zur Lagerung eines zylindrischen Gelenkzapfens.

Wie in Figur 4 zu sehen ist, weisen die Trägerelemente 38 einen kreissegmentförmigen Querschnitt auf, wobei die Außenkanten der Trägerelemente 38 jeweils voneinander weg gerichtet sind, also hier nach außen zeigen. Der Träger 24 hat durch diese Form der Trägerelemente 38 eine sehr hohe Biegefestigkeit und Druckfestigkeit bei sehr geringem Gewicht. Statt des hier dargestellten kreissegmentförmigen Querschnitts sind auch andere Querschnittsformen denkbar. Es ist beispielsweise auch möglich, dass die Trägerelemente 38 einen U-förmigen oder einen eckigen Querschnitt aufweisen. Jedenfalls hat es sich als vorteilhaft erwiesen, dass die Trägerelemente 38 jeweils einen offenen Profilquerschnitt aufweist, wobei der offene Bereich des Profilquerschnitts von dem jeweils anderen Trägerelement weg nach aussen gerichtet ist.

In Folge seiner geringen Torsionssteifigkeit kann der Träger 24 bei einer Verdrehung der Gelenkzapfen um seine Längsachse L verdreht werden (siehe Figur 5). Die in den Lagerteilen 26, 28 angeordneten Lager müssen in diesem Fall keine oder nur eine geringe Torsion ausgleichen, so dass diese wesentlich einfacher und kompakter hergestellt werden können.

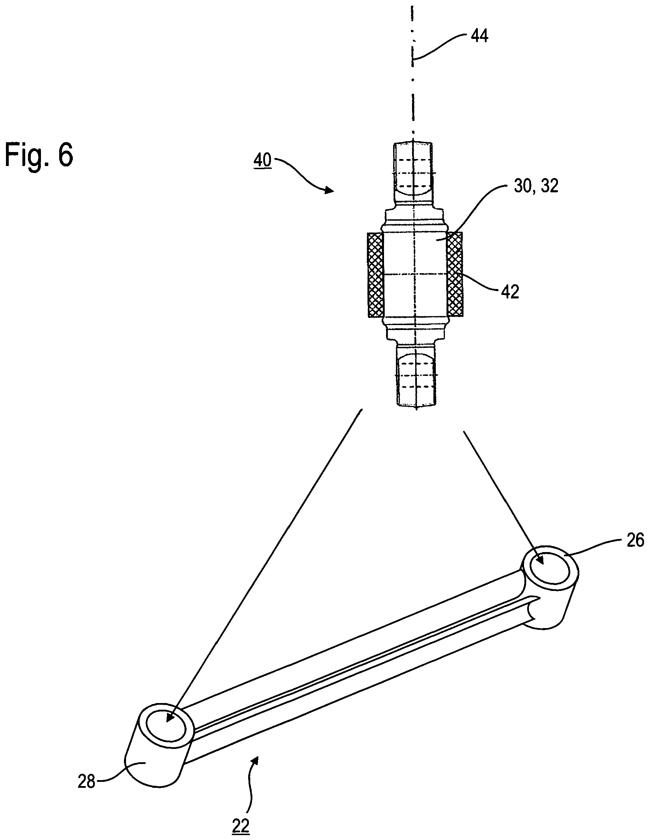

Figur 6 zeigt die Verbindungsstrebe 22 von Figur 5, in Verbindung mit einem in einer Querschnittsansicht gezeigten Gummilager 40, das jeweils zur Aufnahme in den Lagerteilen 26, 28 vorgesehen ist. Das Gummilager 40 weist den Gelenkzapfen 30, 32 und ein Gummielement 42 auf, das den Gelenkzapfen 30, 32 radial umschließt. Der Aussendurchmesser des Gummielements 42 ist an einen Innendurchmesser eines jeweiligen Lagerteils 26, 28 angepasst. Das Gummilager bildet im montierten Zustand zusammen mit den Lagerteilen 26, 28 den vorstehend genannten molekularen Gelenkkörper. Für die Funktionsweise der Verbindungsstrebe 22 bei Verwendung in einem Fahrwerk eines Kraftfahrzeugs oder dergleichen ist von Bedeutung, dass die Gelenkzapfen 30, 32 zumindest um ihre Längsachse 44 bezüglich des Gummielements 40 verdrehbar sind. Anstatt eines Gummielements kann auch ein anderes Bauteil, z.B. eine Kunststoffhülse oder dergleichen für eine Montage der Gelenkzapfen 30, 32 in den Lagerteilen 26, 28 in Betracht kommen, solange dabei die erläuterte Verdrehbarkeit der Gelenkzapfen 30, 32 um ihre Längsachse 44 gewährleistet ist.

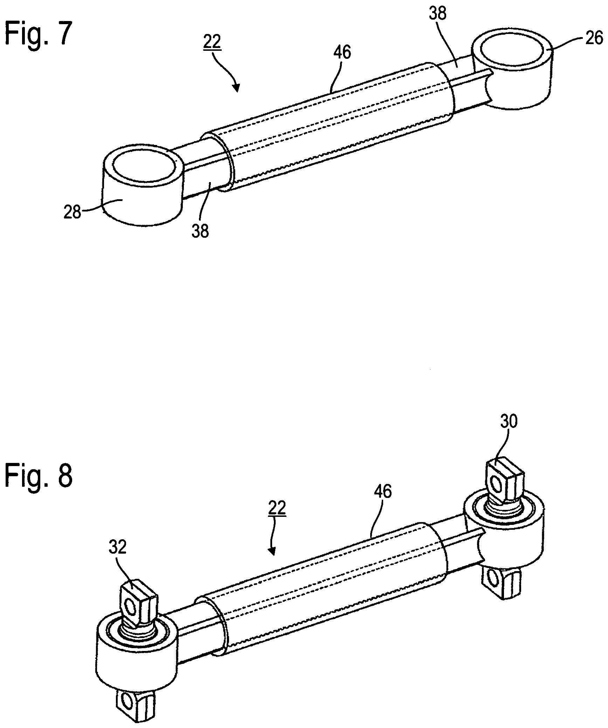

In den Figuren 7 und 8 ist eine weitere Ausführungsform für die erfindungsgemäße Verbindungsstrebe 22 dargestellt. Figur 7 zeigt eine Perspektivansicht der Verbindungsstrebe 22, bei der wie vorstehend erläutert die beiden Trägerelemente 38 an ihren jeweiligen Enden durch ein Lagerteil 26, 28 miteinander verbunden sind. Bei dieser Ausführungsform ist ergänzend ein Stützelement 46 in Form einer Rohrhülse vorgesehen, die die beiden Trägerelemente 38 entlang ihres Umfangs umschließt. Die Rohrhülse 46 kann geeignet an dem Umfang der Trägerelemente 38 befestigt sein, zum Beispiel durch Kleben, Punktschweißen oder dergleichen. Alternativ kann die Rohrhülse 46 bezüglich zumindest eines Trägerelements formschlüssig gehalten sein, so dass die Rohrhülse 46 in Richtung der Längsachse des Trägers 24 gegen ein axiales Verschieben gesichert ist. Die Rohrhülse 46 bewirkt, dass die beiden Trägerelemente 38 bei einer äußeren Krafteinwirkung nicht nach außen ausknicken bzw. wegknicken können. Entsprechend verbessert die Rohrhülse 46 die Biegesteifigkeit der Verbindungsstrebe 22. Alternativ zu der gezeigten Ausführungsform einer Rohrhülse 46 kann das Stützelement auch in Form eines Rings ausgebildet sein, wobei auch eine Mehrzahl von einzelnen Ringen entlang der Längsachse des Trägers 24 möglich ist. Die Wirkung eines solchen Rings bzw. Ringen ist diegleiche wie jene des Rohrhülse 46, nämlich ein Wegknicken der Trägerelemente 38 nach außen zu verhindern.

Die Verbindungsstrebe 22 ist aus einfach herzustellenden Einzelteilen, nämlich den zylindrischen Lagerteilen 26, 28 sowie den schalenförmigen Trägerelementen 38, zusammengesetzt. Diese Bauteile können mit geringem Aufwand einzeln hergestellt und durch Schweißen kostengünstig miteinander verbunden werden. Es ist aber auch denkbar, dass die Bauteile der Verbindungsstrebe 22 auf andere Weise oder mit einem anderen Verfahren miteinander verbunden werden. Beispielsweise kann die Verbindungsstrebe auch durch Schmieden oder durch ein geeignetes Metall-Gießverfahren hergestellt werden.

Die Verbindungsstrebe 22 ist hier als Längslenker in einem Fahrwerk eines Lkw dargestellt. Die erfindungsgemäße Verbindungsstrebe kann aber auch an einem anderen Bauteil des Fahrwerks verwendet werden.

## Patentansprüche

1. Verbindungsstrebe (22) insbesondere für ein Fahrwerk (10) eines Fahrzeugs, mit einem länglichen Träger (24), der zumindest zwei zueinander beabstandete Trägerelemente (38), die an ihren Enden durch jeweils ein Verbindungselement miteinander verbunden sind, wobei der Träger (24) bezüglich seiner Längsachse (L) eine geringe Torsionssteifigkeit und eine hohe Biegesteifigkeit aufweist, **dadurch gekennzeichnet, dass** zumindest ein Trägerelement in seinem Querschnitt die Form eines Rechtecks aufweist, dessen Längsseiten zumindest im Bereich der neutralen Faser in Richtung des jeweils anderen Trägerelements gewölbt ist, und dass das gewölbte Trägerelement im Bereich seiner neutralen Faser einen geringeren Abstand zu dem anderen Trägerelement aufweist als sein äußerer Randbereich.

2. Verbindungsstrebe (22) nach Anspruch 1, **dadurch gekennzeichnet, dass** zumindest ein Trägerelement einen rechteckförmigen Querschnitt mit im Wesentlichen geraden Längsseiten aufweist.

3. Verbindungsstrebe (22) nach Anspruch 1, **dadurch gekennzeichnet, dass** zumindest ein Trägerelement einen offenen Profilquerschnitt aufweist, wobei der offene Bereich des Profilquerschnitts von dem jeweils anderen Trägerelement weg nach aussen gerichtet ist.

4. Verbindungsstrebe (22) nach einem der vorhergehenden Ansprüche, **dadurch gekennzeichnet, dass** zumindest ein Trägerelement einen kreissegmentförmigen Querschnitt aufweist.

5. Verbindungsstrebe (22) nach einem der vorhergehenden Ansprüche, **dadurch gekennzeichnet, dass** beide Trägerelemente in ihrem Querschnitt keinen abgewinkelten Bereich aufweisen.

6. Verbindungsstrebe (22) nach einem der vorhergehenden Ansprüche, **dadurch gekennzeichnet, dass** die Verbindungselemente, durch die die Trägerelemente (38) an ihren jeweiligen Enden miteinander verbunden sind, bei einer äußeren Krafteinwirkung relativ zueinander in einem Winkel von bis zu 20° tordierbar sind, wobei der Träger (24) elastisch tordiert wird.

7. Verbindungsstrebe (22) nach Anspruch 6, **dadurch gekennzeichnet, dass** die Verbindungselemente relativ zueinander in einem Winkel von bis zu 10°, vorzugsweise in einem Winkel von bis zu 5° tordierbar sind.

8. Verbindungsstrebe (22) nach einem der vorhergehenden Ansprüche, **dadurch gekennzeichnet, dass** zumindest ein Stützelement (46) vorgesehen ist, das die Trägerelemente (38) umfänglich umschließt.

9. Verbindungsstrebe (22) nach Anspruch 8, **dadurch gekennzeichnet, dass** das Stützelement (46) in Form eines Rings oder in Form eines Rohrs, das sich entlang der Längsachse (L) des Trägers (24) erstreckt, ausgebildet ist.

10. Verbindungsstrebe (22) nach Anspruch 8 oder 9, **dadurch gekennzeichnet, dass** das Stützelement (46) bezüglich zumindest eines Trägerelements formschlüssig fixiert oder an zumindest einem Trägerelement befestigt ist.

11. Verbindungsstrebe (22) nach einem der vorhergehenden Ansprüche, **dadurch gekennzeichnet, dass** zumindest ein Verbindungselement aus einem Lager (26, 28), vorzugsweise aus einem Gummilager (40), gebildet ist.

12. Verbindungsstrebe (22) nach Anspruch 11, **dadurch gekennzeichnet, dass** das Lager (26, 28) zur Lagerung eines Gelenks geeignet ist, wobei eine Gelenkachse relativ zur Längsachse (L) des Trägers (24) im Wesentlichen senkrecht verläuft.

13. Verbindungsstrebe (22) nach einem der vorhergehenden Ansprüche, **dadurch gekennzeichnet, dass** die Trägerelemente (38) mit einem Verbindungselement verschweißt sind.

14. Verbindungsstrebe (22) nach einem der vorhergehenden Ansprüche, **dadurch gekennzeichnet, dass** ein Verbindungselement ein Teil eines Fahrzeugchassis oder dergleichen ist.

15. Verbindungsstrebe (22) nach einem der vorhergehenden Ansprüche, **dadurch gekennzeichnet, dass** die Verbindungsstrebe einstückig hergestellt ist,

16. Verbindungsstrebe (22) nach einem der vorhergehenden Ansprüche, **dadurch gekennzeichnet, dass** die Verbindungsstrebe ein Längslenker, insbesondere für ein Fahrwerk eines LKW, ist.

## Claims

1. A connecting strut (22), in particular for a chassis (10) of a vehicle, comprising an elongated carrier (24) having at least two carrier elements (38) spaced apart from each other which are connected with each other at their ends by a respective connecting element, the carrier (24) having a low torsional stiffness and a high bending stiffness with respect to its longitudinal axis (L), **characterized in that** the cross-section of at least one carrier element has the shape of a rectangle the long sides of which are curved towards the respective other carrier element at least in the region of the neutral axis, and **in that** the curved carrier element has in the region of its neutral axis a smaller distance from the other carrier element than its outer edge region.

2. The connecting strut (22) according to claim 1, **characterized in that** at least one carrier element has a rectangular cross-section having substantially straight long sides.

3. The connecting strut (22) according to claim 1, **characterized in that** at least one carrier element has an open profile cross-section, the open area of the profile cross-section being directed outwards away from the respective other carrier element.

4. The connecting strut (22) according to any of the preceding claims, **characterized in that** at least one carrier element has a cross-section having the shape of a segment of a circle.

5. The connecting strut (22) according to any of the preceding claims, **characterized in that** both carrier elements have no angled area in their cross-section.

6. The connecting strut (22) according to any of the preceding claims, **characterized in that** the connecting elements by means of which the carrier elements (38) are connected with each other at their respective ends can be twisted relative to each other at an angle of up to 20° in case of an external force application, the carrier (24) being twisted elastically.

7. The connecting strut (22) according to claim 6, **characterized in that** the connecting elements can be twisted relative to each other at an angle of up to 10°, preferably at an angle of up to 5°.

8. The connecting strut (22) according to any of the preceding claims, **characterized in that** at least one support element (46) is provided which encloses the carrier elements (38) on the periphery.

9. The connecting strut (22) according to claim 8, **characterized in that** the support element (46) is configured in the form of a ring or in the form of a tube extending along the longitudinal axis (L) of the carrier (24).

10. The connecting strut (22) according to claim 8 or 9, **characterized in that** the support element (46) is fixed in a form-fitting manner with respect to at least one carrier element or is fastened to at least one carrier element.

11. The connecting strut (22) according to any of the preceding claims, **characterized in that** at least one connecting element is formed of a bearing (26, 28), preferably a rubber bearing (40).

12. The connecting strut (22) according to claim 11, **characterized in that** the bearing (26, 28) is suitable for supporting a joint, a joint axis extending substantially perpendicularly with respect to the longitudinal axis (L) of the carrier (24).

13. The connecting strut (22) according to any of the preceding claims, **characterized in that** the carrier elements (38) are welded to a connecting element.

14. The connecting strut (22) according to any of the preceding claims, **characterized in that** a connecting element is a part of a vehicle chassis or similar.

15. The connecting strut (22) according to any of the preceding claims, **characterized in that** the connecting strut is made in one piece.

16. The connecting strut (22) according to any of the preceding claims, **characterized in that** the connecting strut is a trailing link, in particular for a chassis of a truck.

## Revendications

1. Entretoise de raccordement (22), en particulier pour un châssis (10) d'un véhicule, comportant un support oblong (24) qui présente au moins deux éléments support (38) qui sont espacés l'un de l'autre et qui sont raccordés l'un à l'autre à leurs extrémités par un élément de raccordement respectif, le support (24) présentant une faible rigidité à la torsion et une rigidité à la flexion élevée par rapport à son axe longitudinal (L), **caractérisée en ce qu'**au moins un élément support présente dans sa section transversale la forme d'un rectangle dont les grands côtés sont courbes au moins dans la zone de l'axe neutre, en direction de l'autre élément support respectif, et **en ce que** l'élément support courbe présente dans la zone de son axe neutre une distance plus petite par rapport à l'autre élément support que sa zone de bord extérieure.

2. Entretoise de raccordement (22) selon la revendication 1, **caractérisée en ce qu'**au moins un élément support présente une section transversale rectangulaire à grands côtés sensiblement droits.

3. Entretoise de raccordement (22) selon la revendication 1, **caractérisée en ce qu'**au moins un élément support présente une section transversale de profile ouverte, la zone ouverte de la section transversale de profile étant dirigée vers l'extérieur en éloignement de l'autre élément support respectif.

4. Entretoise de raccordement (22) selon l'une des revendications précédentes, **caractérisée en ce qu'**au moins un élément support présente une section transversale en forme de segment de cercle.

5. Entretoise de raccordement (22) selon l'une des revendications précédentes, **caractérisée en ce que** les deux éléments support ne présentent pas de zone coudée dans leur section transversale.

6. Entretoise de raccordement (22) selon l'une des revendications précédentes, **caractérisée en ce que** les éléments de raccordement au moyen desquels les éléments support (38) sont raccordés l'un à l'autre à leurs extrémités respectives, sont aptes à être tordus l'un par rapport à l'autre selon un angle allant jusqu'à 20° lors de l'application d'une force externe, le support (24) étant élastiquement tordu.

7. Entretoise de raccordement (22) selon la revendication 6, **caractérisée en ce que** les éléments de raccordement sont aptes à être tordus l'un par rapport à l'autre selon un angle allant jusqu'à 10°, de préférence selon un angle allant jusqu'à 5°.

8. Entretoise de raccordement (22) selon l'une des revendications précédentes, **caractérisée en ce qu'**il est prévu au moins un élément de soutien (46) qui renferme les éléments support (38) sur la périphérie.

9. Entretoise de raccordement (22) selon la revendication 8, **caractérisée en ce que** l'élément de soutien (46) est réalisé sous forme d'anneau ou sous forme de tube qui s'étend le long de l'axe longitudinal (L) du support (24).

10. Entretoise de raccordement (22) selon la revendication 8 ou 9, **caractérisée en ce que** l'élément de soutien (46) est fixé par coopération de formes par rapport à au moins un élément support ou est monté sur au moins un élément support.

11. Entretoise de raccordement (22) selon l'une des revendications précédentes, **caractérisée en ce qu'**au moins un élément de raccordement est formé par un palier (26, 28), de préférence par un palier en caoutchouc (40).

12. Entretoise de raccordement (22) selon la revendication 11, **caractérisée en ce que** le palier (26, 28) est adapté au logement d'une articulation, un axe d'articulation s'étendant de manière sensiblement perpendiculaire par rapport à l'axe longitudinal (L) du support (24).

13. Entretoise de raccordement (22) selon l'une des revendications précédentes, **caractérisée en ce que** les éléments support (38) sont soudés sur un élément de raccordement.

14. Entretoise de raccordement (22) selon l'une des revendications précédentes, **caractérisée en ce qu'**un élément de raccordement fait partie d'un châssis de véhicule ou similaire.

15. Entretoise de raccordement (22) selon l'une des revendications précédentes, **caractérisée en ce que** l'entretoise de raccordement est réalisée d'un seul tenant.

16. Entretoise de raccordement (22) selon l'une des revendications précédentes, **caractérisée en ce que** l'entretoise de raccordement est un bras oscillant longitudinal, en particulier pour un châssis d'un camion.
